# EUROPÄISCHE PATENTSCHRIFT

(11) **EP 1 181 674 B1**
(45) Veröffentlichungstag und Bekanntmachung des Hinweises auf die Patenterteilung: **25.02.2004**
(21) Anmeldenummer: 00945523.9
(22) Anmeldetag: 28.04.2000
(51) Int. Cl.: G07F 7/00

(54) **VERFAHREN UND EINRICHTUNG ZUR BETRIEBSUNTERBRECHUNG EINES GERÄTES SOWIE ANWENDUNG DES VERFAHRENS ODER DER EINRICHTUNG**
METHOD AND DEVICE FOR INTERRUPTING THE OPERATION OF A DEVICE AND USE OF SAID METHOD OR SAID DEVICE
PROCEDE ET DISPOSITIF D'INTERRUPTION DE FONCTIONNEMENT D'UN APPAREIL ET APPLICATION DE CE PROCEDE OU DISPOSITIF

(30) Priorität: 29.04.1999 DE 19919480
(43) Veröffentlichungstag der Anmeldung: 27.02.2002
(73) Patentinhaber: Luboch, Uwe, 02999 Gross Särchen (DE)
(72) Erfinder: Luboch, Uwe, 02999 Gross Särchen (DE)
(74) Vertreter: Pätzelt, Peter, Dipl.-Ing.
(86) Internationale Anmeldenummer: PCT/DE2000/001384
(87) Internationale Veröffentlichungsnummer: WO 2000/070564

(56) Entgegenhaltungen:
- EP-A- 0 740 037
- WO-A-97/23986
- DE-A- 3 803 357
- FR-A- 2 747 215
- US-A- 4 624 578
- US-A- 5 258 906
- US-A- 5 510 780

## Beschreibung

Die Erfindung betrifft eine Einrichtung zur Betriebsunterbrechung eines Gerätes nach dem Oberbegriff des Anspruchs 1. Des weiteren betrifft die Erfindung die Anwendung der Einrichtung nach Anspruch 3.

In der wirtschaftlichen und kaufmännischen Praxis werden technische Ausrüstungen für den Haushalt, das Gewerbe oder die Industrie in der Regel auf der Grundlage von Verträgen geliefert und in Betrieb gesetzt. Dabei erbringt der Verkäufer seine vertraglichen Verpflichtungen allgemein, bevor der Käufer seine Verpflichtung zur Zahlung des Kaufpreises erfüllt. Dem Käufer werden dabei Zahlungsfristen von beispielsweise 30 Tagen nach Inbetriebnahme eingeräumt. Innerhalb dieser Frist kann der Käufer die gelieferten und in Betrieb gesetzten Ausrüstungen unbeschränkt nutzen.

Diese Gepflogenheiten werden mit zunehmender Häufigkeit mißbraucht, indem der Käufer wissentlich erst nach mehrfacher Mahnung den Kaufpreis zahlt oder vermeintliche Mängel rügt und deshalb den gesamten Kaufpreis zurückbehält. Bei einem derartigen Verhalten des Käufers entstehen den Verkäufer regelmäßig hohe Verluste, während der Käufer die Ausrüstungen wie sein Eigentum nutzen kann. Daran ändert auch der üblicherweise vereinbarte Eigentumsvorbehalt nichts.

Nach dem Stand der Technik sind keine geeigneten Lösungen bekannt, die den Käufer zur pünktlichen Vertragserfüllung bewegen. Möglichkeiten sind lediglich das Versiegeln des Gerätes oder der Abbau der Ausrüstungen.

Andererseits sind nach dem Stand der Technik Lösungen bekannt, bei denen die Nutzung einer Einrichtung nur möglich ist, wenn vorher der entsprechende Preis bezahlt wurde. Dabei gibt es verschiedene Möglichkeiten. Beispielsweise gibt es den Kauf von Spielmarken oder sogenannten Chips, mit denen die jeweilige Einrichtung eine bestimmte Zeit lang in Betrieb gesetzt werden kann. Eine entsprechende Möglichkeit ist die elektronische Chipkarte mit einem festen Wert oder mit einem aufladbaren Speicher. Nach Verbrauch des Wertes bzw. Ablauf der vorgegebenen Zeit schaltet die Steuerung des jeweiligen Gerätes dieses ab und es ist erforderlich, einen neuen Chip oder eine entsprechend aufgeladene Chipkarte in das Gerät einzuführen. In allen Fällen wird der Betrieb der Geräte mit Hilfe einer internen Steuerung jeweils nur für eine vorbestimmte Zeit in Betrieb gesetzt und danach abgeschaltet.

Die DE 195 20 505 A1 gibt eine Wegfahrsperre für Kraftfahrzeuge an. Ein Sicherungssteuergerät ist über eine Signalleitung mit einem Motorsteuergerät verbunden, wobei von dem Sicherungssteuergerät ein verschlüsselter Freigabecode gesendet wird und das Motorsteuergerät nur betriebsbereit geschaltet wird, wenn der Freigabecode mit einem Referenzcode übereinstimmt. Dabei verfügt das Motorsteuergerät über Speichermittel, in die es einen Freigabecode als Referenzcode einschreiben kann.

Die US 5, 510, 780 gibt ein zeitgesteuertes Kontrollsystem zur Bereitstellung der Energie für eine Einrichtung an. Die Einrichtung ist dabei grundsätzlich nicht mit der Energiequelle verbunden. Erst über die Eingabe eines gültigen Sicherheitscodes in einen Mikroprozessor wird das Kontrollsystem aktiviert. Dabei steuert der Mikroprozessor ein elektrisches Relais an und die Einrichtung wird mit der Energiequelle verbunden.

Die genannten Lösungen des Standes der Technik sind zur Ausräumung des eingangs genannten Konfliktes zwischen Käufer und Verkäufer nicht geeignet oder zu aufwendig.

Nach dem Stand der Technik sind die Schaltungen zur Betriebsunterbrechung grundsätzlich ein Teil der Steuerung selbst oder Vorschaltgeräte, die das Gerät einfach von der Energiequelle trennen, ohne mögliche sicherheitstechnischer Folgen am Gerät zu beachten.

Die Betriebsunterbrechung eines Gerätes nach dem Stand der Technik erfordert, dass diese Maßnahme oder Absicht bereits bei der Konzipierung und Entwicklung des Gerätes vorgesehen und die Steuerung entsprechend ausgelegt wird. Dabei ist es nicht möglich, ein Gerät nur teilweise zu unterbrechen und im übrigen begrenzt funktionsfähig zu halten. Eine Nachrüstung eines beliebigen konventionellen Gerätes unabhängig von dessen eigentlicher Herstellung mit einer Einrichtung zur Betriebsunterbrechung ist mit den Mitteln des Standes der Technik nicht möglich.

Der Erfindung liegt damit als Aufgabe zugrunde, ein Verfahren und eine Einrichtung zur Betriebsunterbrechung eines Gerätes anzugeben, mit denen bei geringem technischen Aufwand die Nutzung eines neu erworbenen Gerätes nach einer bestimmten Zeit verhindert werden kann. Das Verfahren und die Einrichtung sollen unabhängig von der Steuerung des Gerätes selbst genutzt werden können, die Einrichtung soll an das jeweilige Gerät nachrüstbar sein und die betriebstechnische Sicherheit des Gerätes soll auch bei der Betriebsunterbrechung gewährleistet sein. Des weiteren ist es Aufgabe der Erfindung vorteilhafte Anwendungen des Verfahrens und der Einrichtung anzugeben.

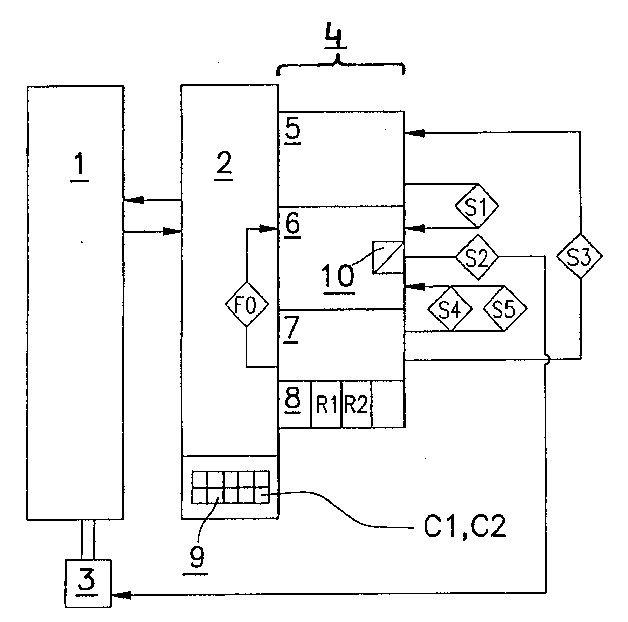

Die Erfindung löst die Aufgabe für die Vorrichtung durch die im kennzeichnenden Teil des Anspruchs 1 genannten Merkmale Eine vorteilhafte Weiterbildung der Erfindung ist in dem Unteranspruch 2 gekennzeichnet und wird nachstehend zusammen mit der Beschreibung der bevorzugten Ausführung der Erfindung, einschließlich der Zeichnung, näher dargestellt. Beispielhafte Anwendungen der Erfindung werden im Anspruch 3 angegeben.

Der wesentliche Kern der Erfindung besteht darin, dass unmittelbar mit der ersten Inbetriebnahme des jeweiligen Gerätes bzw. bei der Übergabe des Gerätes an den Kunden verfahrensgemäße Maßnahmen eingeleitet werden, die die Betriebsbereitschaft des Gerätes nach einer vorgegebenen Zeit unterbrechen, wenn nicht vorher durch Eingabe eines Codes die verfahrensgemäßen Maßnahmen zur Unterbrechung der Betriebsbereitschaft abgebrochen werden.

Bezüglich der Einrichtung besteht das Wesen der Erfindung in der Ausbildung einer gesonderten Einrichtung und deren zusätzliche Anordnung am jeweiligen Gerät, wobei die Einrichtung über die angegebenen Mittel verfügt, die die Bereitstellung mindestens eines Energieträgers und/oder eines Betriebsmediums unterbrechen, soweit nicht vorher durch Eingabe eines Codes die Wirkung der Einrichtung deaktiviert wird.

Grundsätzlich wird der Ablauf des Zeitintervalls nur einmal bei der ersten Inbetriebnahme des Gerätes bzw. bei der Übergabe des Gerätes an den Kunden gestartet und die Betriebsunterbrechung des Gerätes ausgelöst, wenn die angegebenen Gegenmaßnahmen nicht ergriffen werden.

Ein weiteres wesentliches Merkmal der Erfindung besteht darin, dass grundsätzlich nicht in die Steuerung des Gerätes selbst eingegriffen wird, sondern dass eine gesonderte Einrichtung vorhanden ist, die gegebenenfalls auf die Bereitstellung eines Energieträgers und/oder eines Betriebsmediums einwirkt.

Dabei wird unter Energieträger z.B. die Stromversorgung, die Gas- oder Heizölversorgung verstanden. Unter einem Betriebsmedium wird z.B. das zu be- oder verarbeitende Material oder beliebige Zusatzstoffe, wie Verpackungsmaterial, verstanden. Unter Betriebsmedium werden im erweiterten Sinn auch alle sonstigen Elemente verstanden, bei deren Ausfall das Gerät in der Gesamtheit für den Nutzer mehr oder weniger unbrauchbar wird. Dazu gehört das völlige oder teilweise Abschalten gerätespezifischer Elemente wie die Steuerung insgesamt, einzelne Bedienelemente oder Steuerungsanzeigen in der Form, dass diese nicht mehr reagieren oder nicht erkennbar sind. Auch ist es möglich, nur eine oder einige ausgewählte Funktionsgruppen des Gesamtgerätes außer Betrieb zu setzen.

Dabei ist es selbstverständlich, dass sicherheitstechnische Maßnahmen beachtet werden, damit es zu keinen ungewollten und gefährlichen Havarien kommt. Z.B. kann ein erforderliches Notprogramm weiter funktionsfähig erhalten werden.

In der Praxis erfolgt die Anwendung derart, daß die Einrichtung zur Betriebsunterbrechung bei der ersten Übergabe des Gerätes an den Käufer aktiviert wird. Das erfolgt z.B. automatisch beim ersten Anschluss an das Stromnetz oder durch eine gesonderte Anschaltung oder Aktivierung. Beispielsweise ist vertraglich vereinbart, dass der Kaufpreis innerhalb von 30 Tagen zu begleichen ist. Die Einrichtung wird dabei so aktiviert, dass eine mögliche Betriebsunterbrechung nach 30 Tagen plus 5 Tagen Kulanzzeit, also insgesamt 35 Tagen, erfolgt. Wenn der Kaufpreis vor Ablauf der Frist beim Verkäufer eingeht, übergibt dieser dem Käufer den Freigabecode und der Käufer kann durch Eingabe desselben in die Freigabeeinrichtung die Einrichtung endgültig deaktivieren. Es kann auch eine Teilzahlung vereinbart werden und es wird ein Freigabecode bereitgestellt, mit dem das Gerät nicht endgültig freigeschaltet wird, sondern lediglich das Zeitintervall neu gestartet werden kann.

In der Regel ist die Steuerung eines Gerätes so ausgelegt, daß von dieser eine Betriebsunterbrechung ausgelöst wird, wenn ein Energieträger und/oder ein Betriebsmedium nicht zur Verfügung steht bzw. deren Parameter von Sollwerten abweichen.

Die konkrete Ausführung der Erfindung wird sehr stark von dem konkreten Gerät beeinflusst. Bei den modernen Geräten werden überwiegend elektronische Steuerungen eingesetzt. In einem solchen Fall ist es vorteilhaft, auch die erfindungsgemäße Einrichtung als elektronische Bauelementeeinheit auszuführen und parallel zur Gerätesteuerung anzuordnen oder auch zu integrieren.

Es ist aber auch leicht möglich, eine gesonderte Einrichtung vorzusehen, die elektronisch, elektrisch, elektromechanisch, rein mechanisch oder pneumatisch arbeitet. Ein derartiges Gerät kann auch so ausgeführt werden, dass es nach Erfüllung der Aufgabe demontiert und für einen neuen Einsatzzweck bereitgestellt werden kann.

Beispielsweise ist es möglich, bei der Installation einer Heizanlage ein vorgenanntes gesondertes Gerät in einer Weise einzubauen, dass der Käufer dieses nicht in einfacher Weise überbrücken bzw. deaktivieren kann. Dabei gehört es auch zum Schutzumfang der Erfindung, dass die Einrichtung nicht durch Eingabe eines Freigabecodes deaktiviert wird, sondern unmittelbar nach Erfüllung der Verpflichtungen des Käufers das Gerät demontiert wird, ohne dass es zu einer Betriebsunterbrechung gekommen ist.

Der Freigabecode kann auch per Fernsteuerung, Funk- oder Infrarotfernbedienung oder über die Zuschaltung an Datenübermittlungssysteme per Modem und Internet erfolgen.

Es liegt auch innerhalb des Schutzanspruches, den Zeitablauf vor Erreichen des Endpunktes auf den Ausgangspunkt zum Zeitpunkt der ersten Inbetriebnahme zurückzusetzen, so dass das ursprüngliche Zeitintervall neu oder ein anderes vordefiniertes Zeitintervall zu laufen beginnt.

Die Anwendung des Verfahrens oder der Einrichtung kann insbesondere für technische Ausrüstungen im Haushalt, im Gewerbe oder in der Industrie erfolgen.

Die Erfindung wird nachstehend an einem Ausführungsbeispiel näher erläutert werden. Dabei wird die Erfindung an einem Großküchenblock angewendet.

Die zugehörige Zeichnung zeigt schematisch die Funktion einer erfindungsgemäßen elektronischen Einrichtung.

Der Großküchenblock 1 verfügt über eine umfassende elektronische Gerätesteuerung 2 und wird in wesentlichen Teilfunktionen mit Gas beheizt. Dabei weist die Gaszuführung ein Sicherheitsventil 3 auf, welches bei Unregelmäßigkeiten im Betriebsablauf automatisch geschlossen wird.

Die vorliegende Erfindung wird als elektronische Bauelementeneinheit auf einer Steckkarte, der Unterbrechungssteckkarte 4, ausgeführt, die an einen gesonderten Platz in die Gerätesteuerung 2 eingesteckt wird.

Dabei besteht die Unterbrechungssteckkarte 4 aus einem Zeitglied 5, einer Abschalteinrichtung 6 und einer Freigabeeinrichtung 7 mit einem Referenzcodespeicher 8.

Nach Abschluss der Montage des Großküchenblockes 1 wird diese dem Käufer oder Nutzer übergeben und es kommt zur ersten vorgesehenen Nutzung. Dabei wird die Anlage unter Strom gesetzt und die Gaszuführung angeschaltet. Gleichzeitig wird die Unterbrechungssteckkarte 4 an eine Spannung gelegt und das Zeitglied 5 aktiviert. Vom Verkäufer ist das Zeitglied auf ein Zeitintervall von 35 Tage voreingestellt, die sich aus einer vereinbarten Zahlungsfrist für den Kaufpreis von 30 Tagen und aus 5 Kulanz-Tagen zusammensetzt. Eine Stützbatterie sorgt dafür, dass das Zeitglied 5 auch weiterläuft, wenn der Großküchenblock 1 zeitweise außer Betrieb gesetzt wird.

Wenn der Käufer seiner Zahlungsverpflichtung innerhalb des Zeitintervalls von 35 Tagen nicht nachkommt, gibt das Zeitglied 5 mit Ablauf des Zeitintervalls ein Signal S1 an die Abschalteinrichtung 6, die unmittelbar mit einem Unterbrechungssignal S2 das Sicherheitsventil 3 der Gaszuführung ansteuert und die Schließung des Sicherheitsventils 3 veranlaßt. Dabei bleibt das Signal S2 von der Abschalteinrichtung 6 ständig aufrechterhalten, derart daß das Sicherheitsventil 3 nicht mit anderen Mitteln wieder geöffnet werden kann.

Die Gerätesteuerung des Großküchenblockes 1 registriert im Rahmen der Anlagensteuerung den Ausfall der Gaszufuhr zum Großküchenblock 1 und veranlasst ihrerseits eine Betriebsunterbrechung des gesamten Großküchenblocks 1 wegen einer "Havarie".

Die elektronische Gerätesteuerung 2 in Verbindung mit der Unterbrechungssteckkarte 4 und dem Sicherheitsventil 3 für die Gaszuleitung ist derart spezifisch und kompliziert, daß es für den Nutzer in der Regel nicht möglich ist, die aufgetretene Betriebsunterbrechung mit eigenen Mitteln zu beheben. Er muss sich also an der Verkäufer oder Installateur wenden und erfährt von diesem, wenn er die vertraglichen Vereinbarungen nicht genau kennt, dass die Betriebsunterbrechung zwangsweise und automatisch erfolgte, weil der vereinbarte Kaufpreis noch nicht bezahlt wurde und in der Folge der Großküchenblock 1 noch nicht endgültig freigeschaltet wurde.

Wenn man beispielhaft davon ausgeht, dass der Verkäufer seinerseits noch einen Mangel zu vertreten hat, kann zu einem beliebigen Zeitpunkt vereinbart werden, dass die Zahlungsfrist insgesamt oder für einen Teil des Kaufpreises verlängert wird. In diesem Fall stellt der Verkäufer dem Käufer eine Codenummer C1 zur Verfügung, beispielsweise die Ziffernfolge "44678". Diese Ziffernfolge kann der Käufer nach gesonderter Anwahl einer Eingabeaufforderung, in einer als solche bekannten Art, mit einer üblicherweise vorhandenen Tastatur 9 an der Gerätesteuerung 2 eingeben. Die Eingabe wird an den Referenzcodespeicher 8 innerhalb der Freigabeeinrichtung 7 weitergeleitet und dort mit den vorhandenen Referenzcodes verglichen. Im vorliegenden Fall liegt ein Referenzcode R1 für die Ziffernfolge "44678" vor, was dazu führt, daß die Freigabeeinrichtung 7 ein Signal S3 an das Zeitglied 5 abgibt, wodurch dieses auf "Null" gestellt wird.

Wenn zu diesem Zeitpunkt ein Signal S2 von der Abschalteinrichtung 6 zum Sicherheitsventil 3 wirksam ist, dann wird von der Freigabeeinrichtung 7 gleichzeitig ein Signal S4 an die Abschalteinrichtung 6 abgegeben, wodurch das Unterbrechungssignal S2 aufgehoben wird und das Sicherheitsventil 3 an der Gaszuleitung die Gaszuführung wieder freigibt. Die Gerätesteuerung 2 des Großküchenblockes 1 registriert die Behebung der "Havarie" und die normalen Funktionen werden wieder ausgeführt.

Wird innerhalb des jetzt erneut laufenden Zeitintervalls der Kaufpreis im erforderlichen Umfang bezahlt, übermittelt der Verkäufer dem Käufer einen neuen Code C2 mit der Ziffernfolge "66391", der nach der bereits beschriebenen Eingabe über die Tastatur 9 im Referenzcodespeicher 8 mit den gespeicherten Referenzcodes verglichen wird. Im Beispiel ist ein Referenzcode R2 mit der Ziffernfolge "66391" im Referenzcodespeicher 8 gespeichert. Damit gibt die Freigabeeinrichtung 7 ein Signal S5 an die Abschalteinrichtung 6, worauf die Abschalteinrichtung 6 ein internes Signal abgibt, mit der Wirkung, dass ab diesem Zeitpunkt die Abgabe eines Signals S2 an das Sicherheitsventil 3 der Gaszuleitung nicht mehr möglich ist bzw. ein bestehendes Signal S2 gelöscht wird. In der Zeichnung ist diese interne Steuerung als Schaltelement 10 angedeutet. Die Ansteuerung des Sicherheitsventils 3 von der Abschalteinrichtung 6 ist damit endgültig ausgeschlossen.

Unbeeinflusst von den beschriebenen Regelungen bleiben natürlich alle anderen sicherheitstechnischen Steuerleitungen und Regelungsmechanismen der Gerätesteuerung 2 zum Sicherheitsventil 3.

Die erfindungsgemäße Einrichtung ist nach Ablauf der beschriebenen Steuerung über die erfindungsgemäße Unterbrechungssteckkarte 4 völlig wirkungslos und kann in der Gesamtheit von der Gerätesteuerung 2 entfernt werden und an einem anderen Gerät zum Einsatz kommen.

Im einzelnen können innerhalb der programmierten Funktionen Unterbrechungssteckkarte 4 noch weitere Schaltvarianten vorgesehen werden.

Sollte z. B. statt des Codes C1 bzw. des Codes C2, aus welchen Gründen auch immer, an der Tastatur 9 ein falscher Code Cx eingegeben worden sein, d.h. ein Code, der im Referenzcodespeicher 8 nicht vorhanden ist, erfolgt in bekannter Weise über eine Schleife die Ausgabe einer Aufforderung zur Neueingabe. Wenn es gewünscht wird, kann an dieser Stelle vorgesehen werden, dass bei dreimaliger Eingabe eines falschen Codes Cx oder Cx-n eine bewusste Manipulationsversuch angenommen wird und es erfolgt von der Freigabeeinrichtung 7 die Ausgabe eines Signals F0 an die Abschalteinrichtung 6 mit der Wirkung, dass diese ein Signal S2 zur Abschaltung des Sicherheitsventils 3 abgibt.

Die Erfindung ist selbstverständlich nicht auf das beschriebene Ausführungsbeispiel beschränkt. So kann die Ansteuerung des Sicherheitsventils 3 auch über die Beeinflussung der Gerätesteuerung 2 erfolgen. Andererseits können die Funktionen der einzelnen Elemente der Unterbrechungssteckkarte 4 auch einander überlagert oder miteinander verknüpft sein. Die Signale von der Freigabeeinrichtung 7 können, wenn es möglich ist, auch die Abschalteinrichtung 6 umgehen und z. B. direkt an das Zeitglied 5 abgegeben werden.

Es ist es ohne weiteres möglich im Detail andere Ausführungen zu wählen. Erfindungswesentlich ist, dass die erläuterten Funktionen in technisch relevanter Weise von äquivalenten Bauelementen entsprechend erwirkt werden.

Insbesondere kann die beispielhafte elektronische Unterbrechungssteckkarte 4 durch technisch andersartige elektrische, elektro-mechanische, mechanische oder pneumatische Steuerungen ersetzt werden. Wobei es unwesentlich ist, ob es sich dabei um eine gesonderte Baueinheit handelt oder ob die Funktionen gesondert in die Gerätesteuerung integriert sind.

Eine elektro-mechanische oder mechanische Steuerung kann so ausgebildet werden, dass an dem beispielhaften Sicherheitsventil eine konkrete Abschalteinrichtung vorgesehen wird, die das Sicherheitsventil direkt schließt, wenn eine voreingestellte Zeit abgelaufen ist. Danach kann das Sicherheitsventil nur mit einem spezifischen formschlüssigen Element, ähnlich einem Sicherheitsschlüssel wieder geöffnet werden. Oder mit dem spezifischen formschlüssigen Element wird die Abschalteinrichtung, nach Vorliegen der erforderlichen Gegebenheiten, komplett vom Sicherheitsventil entfernt, da die Aufgabe der Einrichtung erfüllt ist.

In der Praxis kann die Erfindung besonders einfach realisiert werden, wenn das Verfahren bzw. die Einrichtung mit elektrischen oder elektronischen Mitteln unmittelbar auf die interne Steuerung des Gerätes einwirkt.

## Patentansprüche

1. Einrichtung zur Betriebsunterbrechung eines Gerätes, welches zum Betrieb die Bereitstellung mindestens eines Energieträgers und/oder eines Betriebsmediums erfordert und eine interne Steuerung und/oder Regelung aufweist, bestehend aus einem Zeitglied (5), das eine Einrichtung zur Vorgabe eines Zeitintervalls aufweist und mit einer Einrichtung zur Aktivierung des Zeitgliedes (5) und mit einem Signalgeber verbunden ist, der ein Signal (S1) an eine Abschalteinrichtung (6) abgeben kann, wenn das vorgegebene Zeitintervall abgelaufen ist, einer Freigabeeinrichtung (7) mit einem Referenzcodespeicher (8) sowie einer Eingabeeinrichtung (8), über die ein Freigabecode (C1, C2) eingegeben werden kann, wobei der Referenzcodespeicher (8) Mittel aufweist, über die der Freigabecode (C1, C2) mit den Referenzcodes (R1, R2) verglichen und im Falle der Übereinstimmung ein Signal (S3) an das Zeitglied (5) abgegeben werden kann, wodurch das Zeitglied (5) deaktiviert oder auf den Stand zurückgesetzt werden kann, wie er bei der ersten bestimmungsgemäßen Nutzung des Gerätes gegeben war, die Abschalteinrichtung (6) unabhängig vom Gerät und unabhängig von der internen Steuerung und/oder Regelung des Gerätes mit den Mitteln zur Bereitstellung des Energieträgers und/oder des Betriebsmediums verbunden werden kann, so dass im Falle der Aktivierung des Signals (S1) die Abschalteinrichtung (6) die Bereitstellung des Energieträgers und/oder des Betriebsmediums unterbricht und dass am Referenzcodespeicher (8) ein Code (C2) eingegeben werden kann, der zur Ausgabe eines Signals (S5) von der Freigabeeinrichtung (7) an die Abschalteinrichtung (6) führt, **dadurch gekennzeichnet, dass** die Abgabe eines Signals (S1) endgültig verhindert wird.

2. Einrichtung nach Anspruch 1, **dadurch gekennzeichnet, dass** die Abschalteinrichtung (6) an eine wesentliche Steuerleitung als Mittel zur Bereitstellung des Energieträgers und/oder des Betriebsmediums geschaltet ist und im Falle der Ausgabe des Signales (S5) ein Signal an die Abschalteinrichtung abgegeben wird, wodurch die Steuerleitung endgültig auf eine Umgehungsleitung geschaltet wird, die von der Einrichtung unabhängig ist.

3. Anwendung der Einrichtung nach Anspruch 1 oder 2 für technische Ausrüstungen im Haushalt, im Gewerbe oder in der Industrie.

## Claims

1. Device for interrupting the operation of an item of equipment which requires the provision of at least one source of energy and/or an operating medium to operate and has an internal open-loop and/or closed-loop control, comprising a timing element (5), which has a device for the pre-selection of a time interval and is connected to a device for activating the timing element (5) and to a signal transmitter, which emits a signal (S1) to a disconnecting device (6) when the pre-selected time interval has elapsed, a release device (7) with a reference code memory (8) and also an input device (9), by means of which a release code (C1, C2) can be entered, the reference code memory (8) having means by which the release code (C1, C2) can be compared with the reference code (Rl, R2) and, in the case in which they coincide, a signal (S3) can be emitted to the timing element (5), whereby the timing element (5) can be deactivated or reset to the state as it was when the item of equipment was first used for the intended purpose, it being possible for the disconnecting device (6) to be connected independently of the item of equipment and independently of the internal open-loop and/or closed-loop control of the item of equipment to the means for providing the source of energy and/or the operating medium, so that, in the event of activation of the signal (S1), the disconnecting device (6) interrupts the provision of the source of energy and/or the operating medium and that a code (C2) which leads to the output of a signal (S5) by the release device (7) to the disconnecting device (6) can be entered at the reference code memory (8), **characterized in that** the emission of a signal (S1) is definitively prevented.

2. Device according to Claim 1, **characterized in that** the disconnecting device (6) is coupled to an essential control line as means for providing the source of energy and/or the operating medium and, in the event of output of the signal (S5), a signal is emitted to the disconnecting device, whereby the control line is definitively switched to a bypass line, which is independent of the device.

3. Use of the device according to Claim 1 or 2 for technical equipment in the home, trade or industry.

## Revendications

1. Dispositif d'interruption de fonctionnement d'un appareil qui exige pour fonctionner la mise à disposition d' au moins un support d'énergie et/ou d'un moyen d'exploitation et présente une commande et/ou une régulation interne, consistant en un élément temporisateur (5), qui comporte un dispositif de prescription d'un intervalle de temps et est relié à un dispositif d'activation de l'élément temporisateur (5) et à un émetteur de signaux qui peut envoyer un signal (S1) à un dispositif de déconnexion (6) lorsque l'intervalle de temps prédéfini est écoulé, en un dispositif de déblocage (7) comportant une mémoire de codes de référence (8) ainsi qu'en un dispositif de saisie (8) grâce auquel un code de déblocage (C1, C2) peut être saisi, la mémoire de codes de référence (8) présentant des moyens grâce auxquels le code de déblocage (C1, C2) peut être comparé avec les codes de référence (R1, R2) et un signal (S3) peut être envoyé à l'élément temporisateur (5) en cas de concordance, ce qui permet de désactiver l'élément temporisateur (5) ou de le remettre en l'état où il se trouvait lors du premier usage conforme à la destination de l'appareil, le dispositif de déconnexion (6) pouvant être comparé, indépendamment de l'appareil et indépendamment de la commande et/ou régulation interne de l'appareil, avec les moyens de mise à disposition du support d'énergie et/ou du moyen d'exploitation, de sorte qu'en cas d'activation du signal (S1), le dispositif de déconnexion (6) interrompt la mise à disposition du support d'énergie et/ou du moyen d'exploitation et qu'on peut saisir dans la mémoire de codes de référence (8) un code (C2) qui entraîne l'envoi d'un signal (S5) du dispositif de déblocage (7) au dispositif de déconnexion (6), **caractérisé en ce que** l'envoi d'un signal (S1) est finalement évité.

2. Dispositif selon la revendication 1, **caractérisé en ce que** le dispositif de déconnexion (6) est branché à un câble de commande substantiel servant de moyen de mise à disposition du support d'énergie et/ou du moyen d'exploitation et qu'en cas d'envoi du signal (S5), un signal est envoyé au dispositif de déconnexion, ce qui entraîne finalement la commutation du câble de commande sur un câble de dérivation qui est indépendant du dispositif.

3. Application du dispositif selon la revendication 1 ou 2 pour des équipements techniques à la maison, dans l'artisanat ou dans l'industrie.
